# FASCICULE DE BREVET EUROPEEN

(11) **EP 4 155 700 B1**
(45) Date de publication et mention de la délivrance du brevet: **25.03.2026**
(21) Numéro de dépôt: 22196161.8
(22) Date de dépôt: 16.09.2022
(51) Int. Cl.: G01K 11/3213, G02B 6/02, H01M 10/48, G02B 6/12, H01M 10/0525

(54) **FIBRE OPTIQUE THERMO-FLUORESCENTE, PROCÉDÉ DE FABRICATION ET APPLICATIONS**
THERMOFLUORESZIERENDE OPTISCHE FASER, HERSTELLUNGSVERFAHREN UND ANWENDUNGEN
THERMO-FLUORESCENT OPTICAL FIBRE, METHOD FOR MANUFACTURING SAME AND USES THEREOF

(30) Priorité: 24.09.2021 FR 2110067
(43) Date de publication de la demande: 29.03.2023
(73) Titulaire: Commissariat à l'Energie Atomique et aux Energies Alternatives, 75015 Paris (FR)
(72) Inventeur: RACCURT, Olivier, 38054 Grenoble cedex 09 (FR); PONCELET, Olivier, 38054 Grenoble cedex 09 (FR)
(74) Mandataire: Germain Maureau

(56) Documents cités:
- US-A- 6 045 259
- US-A1- 2002 186 748

## Description

L'invention concerne une fibre optique thermo-fluorescente à base de particules thermo-fluorescentes, un procédé pour la fabriquer, ainsi que ses applications, en particulier dans un capteur de température à fibre optique.

Les capteurs de température par fibre optique ont été développés pour collecter des données thermiques précises sur des structures ou dans des dispositifs, en particulier en vue de détecter les anomalies qui pourraient affecter la sécurité et la fiabilité de ceux-ci. La présente description sera orientée vers l'utilisation de capteurs pour la mesure de températures dans des batteries afin de mieux appréhender les phénomènes qui entraînent une surchauffe ou un emballement thermique et déterminer en temps réel leur état de marche. Bien entendu, les applications des capteurs de l'invention ne sont pas restreintes à ce domaine, elles s'étendent à tout secteur industriel, médical, biologique nécessitant, à un moment ou à un autre, la détermination d'une température, celle-ci pouvant aller de -180°C à 400°C.

Les capteurs à fibre optique à base de particules sensibles font appel à diverses technologies impliquant des phénomènes d'absorption, d'interférométrie, de fluorescence, de diffraction et/ou de résonance. Le document, A. Urrutia et al. « Optical fiber sensors based on nanoparticle-embedded coatings », Journal of Sensors, vol. 2015, Article ID805053, 18 pages, 2015 est une synthèse des principales techniques employées pour fabriquer de tels capteurs. Ainsi, on connait un procédé de fabrication d'une fibre optique fonctionnalisée par des particules sensibles, consistant à retirer en des sites sur la longueur de la fibre optique une partie de la gaine et à la remplacer par un revêtement incorporant des particules luminescentes qui interagiront avec leur environnement pour fournir un signal. Un autre procédé recourt à une modification de la structure et de la géométrie de la fibre optique sur une partie de sa longueur, selon lequel, en certains sites, la gaine est retirée puis la fibre optique est traitée par fusion et effilage en présence de particules luminescentes pour former des sites hautement sensibles au milieu dans lequel la fibre optique est exposée.

Selon une voie classique de mise en œuvre d'un capteur à fibre optique à base de particules thermo-fluorescentes, une sonde à base desdites particules est déposée à une extrémité d'une fibre optique et/ou sur des sites sur la longueur d'une fibre optique par un procédé sol-gel. En fonctionnement, un rayonnement lumineux d'absorption ou d'excitation est envoyé à travers la fibre optique pour atteindre la sonde. Le rayonnement d'émission résultant est récupéré et renvoyé par la même fibre vers un détecteur (de type photodiode, photomultiplicateur, spectrophotomètre, etc...) qui permet la mesure du signal de fluorescence et donc la mesure de la température par traitement du signal.

La performance d'un capteur à fibre optique, en termes de sélectivité et de précision, dépend majoritairement des qualités de la sonde, c'est-à-dire de la couche de particules sensibles déposées sur la fibre optique. Celle-ci est généralement constituée d'une matrice dans laquelle des particules sensibles ont été incorporées et qui doit permettre aux dites particules d'accéder aux conditions du milieu auxquelles elles sont sensibles pour obtenir un signal. La nature de la matrice, l'intégration des particules, le dépôt de la couche sur la fibre optique sont autant de sujets qui ont fait l'objet de développements parmi lesquels on peut citer des matrices à base de matériaux poreux à surface spécifique élevée, par exemple de type zéolithes à teneurs élevées en silice, à base de polymères de type polystyrène, caoutchouc silicone, Nafion^{®}, à base de gel obtenu par le procédé sol-gel, tel qu'un xérogel.

Selon US2002/186748A1, il est décrit un système de contrôle de la température d'un tissu lors d'un traitement par laser de ce dernier afin que la température soit portée à une valeur permettant d'assurer un traitement efficace du tissu et d'autre part d'en empêcher toute lésion qui pourrait être encourue par une température trop élevée. Le système comporte une fibre optique qui comprend un cœur en silice, une gaine en fluoropolymère entourant le cœur et une couche « tampon », la fibre optique étant enfermée dans un manchon dans lequel sont distribuées des particules de sulfate de baryum..

Malgré les efforts engagés, ces techniques présentent l'inconvénient de ne pas permettre une maîtrise suffisante de la distribution des particules dans la matrice, en terme de quantité, en terme d'homogénéité de répartition des particules au niveau des sites concernés et en terme de positionnement des particules par rapport au cœur de la fibre optique. Tous ces paramètres sont pourtant cruciaux pour obtenir un résultat optimal.

L'invention apporte une solution aux inconvénients précités des procédés connus avec un procédé de fabrication d'une fibre optique thermo-fluorescente permettant de contrôler la quantité, la répartition, et aussi le positionnement des particules sensibles dans le film déposé sur la fibre optique.

Ainsi, l'invention concerne un procédé de fabrication d'une fibre optique thermo-fluorescente, comprenant les étapes suivantes :
on dispose d'une fibre optique comprenant un cœur apte à propager la lumière et une gaine, ladite fibre optique présentant au moins une extrémité et/ou un site sur sa longueur, dépourvu de gaine, ladite extrémité et/ou ledit site étant apte à irradier un rayonnement lumineux provenant du cœur de la fibre optique,
on dépose sur ladite extrémité et/ou ledit site de la fibre optique, au moins un système photo-polymérisable comprenant au moins un monomère photo-polymérisable et des particules thermo-fluorescentes,
on envoie dans la fibre optique un rayonnement activant la photo-polymérisation dudit système photo-polymérisable pour former une matrice photo-polymérisée comprenant lesdites particules, et ainsi obtenir ladite fibre optique thermo-fluorescente.

L'invention se rapporte aussi à une fibre optique thermo-fluorescente comprenant un cœur apte à propager la lumière et une gaine, ladite fibre portant au moins à l'une de ses extrémités ou en un site sur sa longueur, dépourvu de gaine, une sonde constituée d'une matrice comprenant des particules thermo-fluorescentes, la matrice étant photo-polymérisée, et s'étend à toute application d'une telle fibre optique thermo-fluorescente, et notamment à un capteur de température comprenant une telle fibre optique thermo-fluorescente. Ainsi, l'invention concerne l'utilisation d'un tel capteur de température, pour déterminer la température d'un générateur électrochimique, tel qu'une batterie et notamment une batterie à Li-ion.

Avant d'exposer l'invention plus en détails, certains termes/expressions utilisés dans le présent texte sont définis.

Par particules, on entend des particules inorganiques ou organiques, de toute taille, étant revêtues totalement ou partiellement, encapsulant et/ou incorporant au moins une molécule thermo-fluorescente. Elles sont de taille micrométrique, sub-micrométrique ou nanométrique. Aux fins de mesure de températures dans des batteries selon une application particulière de l'invention, elles ont avantageusement une taille comprise entre 1 nm et 10 µm.

Par thermo-fluorescence, on comprend la capacité d'un matériau à émettre quasiment instantanément, à une température donnée et sous l'effet d'un rayonnement lumineux dit rayonnement d'absorption ou d'excitation, un rayonnement lumineux de même longueur d'onde ou de longueur d'onde différente dit rayonnement d'émission. Le rayonnement lumineux émis par le matériau thermo-fluorescent est caractérisé par un spectre d'émission comportant un ou plusieurs pics dont l'intensité et ou le temps de vie de luminescence varie en fonction de la température.

Conformément à la présentation ci-dessus de l'invention, le procédé de l'invention permet, par polymérisation photo-activée conduite *in situ,* d'obtenir une sonde comprenant une matrice polymère dans laquelle les particules thermo-fluorescentes sont emprisonnées. En recourant à un rayonnement lumineux passant dans la fibre optique comme agent de polymérisation, l'invention présente en particulier l'intérêt de favoriser la formation d'un film riche en particules à proximité du cœur de la fibre optique, ce qui participe des performances d'une sonde.

Non seulement le procédé de l'invention permet de surmonter les obstacles des procédés connus, mais il présente d'autres avantages comme une mise en œuvre simple. Ainsi, puisque la polymérisation du précurseur est photo-activable, la première étape du procédé consistant à déposer sur ladite extrémité et/ou ledit site de la fibre optique au moins un précurseur photo-polymérisable et des particules thermo-fluorescentes, peut être conduite par simple trempage de la fibre dans ledit précurseur et lesdites particules thermo-fluorescentes. Seuls l'extrémité et/ou le site étant accessibles au rayonnement lumineux envoyé dans la fibre optique, la polymérisation du précurseur ne se produira qu'en ces endroits.

Les différents objets de l'invention et des mises en œuvre particulières de ceux-ci sont ci-après exposés en détails, les diverses caractéristiques énoncées étant optionnelles et devant être considérées seules ou en combinaison.

Comme indiqué ci-dessus, la matrice d'une sonde d'une fibre optique selon l'invention est obtenue par photo-polymérisation d'au moins un monomère.

La photo-polymérisation d'un polymère ou de polymères est une réaction bien connue de l'homme du métier et le choix des ingrédients d'un système de photo-polymérisation approprié, à savoir le ou les monomères, le ou les photo-initiateurs, et tout ingrédient complémentaire qui permettrait d'accroître les qualités de la matrice en vue d'une plus grande efficacité de la sonde ou d'en faciliter la préparation, appartiennent aux connaissances générales de l'homme du métier. Il est bien entendu nécessaire de choisir les ingrédients compatibles avec les exigences liées à la matrice recherchée ; en particulier le polymère doit être sensiblement inerte vis-à-vis des particules thermo-fluorescentes qui seront contenues dans la matrice ; il doit aussi résister aux conditions physiques/chimiques du milieu dans lequel la fibre optique est utilisée ; comme dit précédemment, un capteur de l'invention est notamment destiné à la mesure de températures dans des batteries qui sont des milieux très acides et dont la température peut atteindre 150°C en cas de dysfonctionnement

Un monomère photo-polymérisable peut être choisi parmi les acrylates et les méthacrylates et en particulier les méthyl-acrylates et les méthyl-méthacrylates ; ainsi, la matrice photo-polymérisée est choisie dans le groupe des polymères comprenant les polyacrylates et les polyméthacrylates et leurs mélanges. ; les méthacrylates, moins réactifs, sont préférés car ils offrent une plus grande souplesse d'emploi ; lesdits acrylates et méthacrylates sont avantageusement fonctionnalisés par au moins une fonction choisie parmi les halogènes comme le brome ou le fluor, le soufre, et des noyaux aromatiques ; ils présentent l'avantage d'agir sur l'indice de réfraction permettant donc de contrôler ce paramètre dans la matrice ; ainsi les monomères acrylates ou méthacrylates fluorés permettent d'atteindre des valeurs d'indice de réfraction de l'ordre de 1,4, des monomères acrylates ou méthacrylates bromés, soufrés ou aromatiques permettent d'atteindre des valeurs d'indice de réfraction de l'ordre de 1,8. Bien entendu, plusieurs monomères peuvent être employés.

Selon une mise en œuvre préférentiel d'un procédé de l'invention, le système de photo-polymérisation contient de 70 à 95% en poids par rapport au poids du système, d'un acrylate ou d'un méthacrylate ci-dessus, ou de tout mélange de ceux-ci.

En remplacement ou de préférence en complément d'un monomère ci-dessus, le système de photopolymérisation peut comprendre un ou plusieurs autres monomères qui ont le pouvoir de conférer à la matrice un réseau tridimensionnel plus ou moins rigides. Ainsi pour un réseau tridimensionnel rigide et mécaniquement résistant, on choisira un monomère notamment parmi le diacrylate de dipropylène glycol (DPGDA), le tétracrylate de pentaérythritol (PETA), l'isocyanurate de tris[2-(acryloyl)éthyl] TAEI), l'acrylate d'isobornyle (IBOA), le diacrylate de tricyclodécandimethanol (DCPDA). Au contraire, à la recherche d'un réseau mécaniquement souple, on préférera des monomères ou des oligomères silicone-thiol et -vinyl substitués. L'ajout de ces ingrédients permet au surplus de moduler la viscosité du mélange avant la polymérisation.

Selon une mise en œuvre préférentiel d'un procédé de l'invention, le système de photo-polymérisation contient jusqu'à 29% en poids par rapport au poids du système, d'un monomère ou d'un oligomère ci-dessus influençant le réseau tridimensionnel, ou de tout mélange de ceux-ci.

Le système de photo-polymérisation peut comprendre un ou plusieurs photo-initiateurs. Le choix du photo-initiateur dépend la longueur d'onde du rayonnement utilisé pour activer la génération de radicaux et partant la photo-polymérisation. Celle-ci dépend donc de la source de lumière et de la capacité de la fibre à transporter les photons dans le domaine d'énergie choisi.

De manière générale, on privilégiera l'utilisation de photo-initiateurs de type 1, et de préférence ceux n'engendrant pas un jaunissement de la matrice. Les photo-initiateurs de type 2 peuvent être employés, ils nécessitent cependant une amine pour stabiliser les radicaux qui a pour inconvénient de provoquer au cours du temps un jaunissement de la matrice. On peut cependant citer le formate de méthyl benzoyle qui bien que de type 2 ne génèrera pas de jaunissement.

Des photo-initiateurs préférés sont les suivants :
1-Hydroxy-cyclohexyl-phenyl-ketone (Irgacure 184) 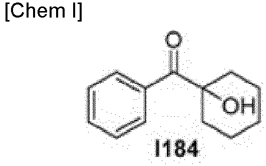
2,2-Dimethoxy-1,2-diphenylethan-1-one (Irgacure 651) 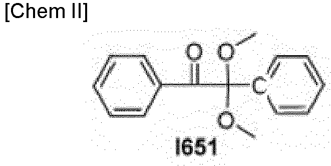
1-[4-(2-Hydroxyethoxy)-phenyl]-2-hydroxy-2-methyl-1-propane-1-one (Irgacure 2959)
2-Benzyl-2-dimethylamino-1-(4-morpholinophenyl)-butanone-1 (Irgacure 369) 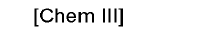 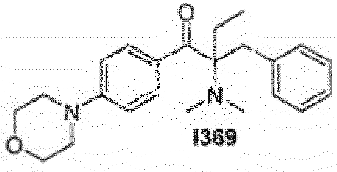
2-Hydroxy-2-methyl-1-phenyl-propan-1-one (Irgacure 1173) 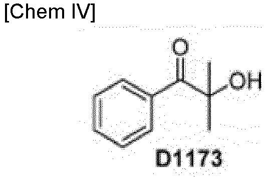
Ivocerin-dibenzoyl germanium (IVO), sous réserve que le milieu dans lequel la fibre de l'invention sera utilisée ne soit pas sensible à la présence de Germanium 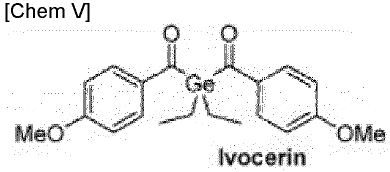
trimethylbenzoyldiphenylphosphine oxide (TPO) 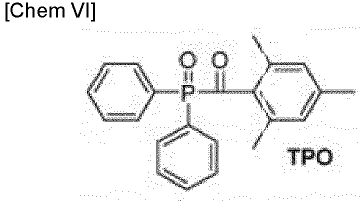
Bisacylphosphine oxide BAPO

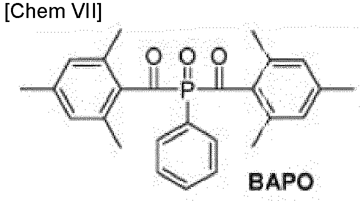

Classiquement, le ou les photo-initiateurs ont une teneur en poids par rapport au poids du système de photo-polymérisation de l'ordre de 0,01% à 1%. Selon une mise en œuvre préférentielle d'un procédé de l'invention, on retiendra des teneurs de photo-initiateur(s) plutôt élevées, afin d'obtenir un figement rapide de la matrice. Des teneurs élevées permettent d'introduire d'autres ingrédients, par exemple de type additifs, dans le système de photo-polymérisation, sans risque de perturbation de la prise quasi-instantanée de la matrice.

A titre d'exemple, il peut être bénéfique d'introduire un colorant fluorescent qui viendra compléter le signal des particules thermo-fluorescentes (ou thermo-fluorophore).

On peut trouver une bonne description des résines photocurables dans cette revue, Samuel Clark Ligon,, Robert Liska, Jürgen Stampfl, Matthias Gurr,and Rolf Mülhaupt, Chem. Rev. 2017, 117, 10212-10290.

Le système de photo-polymérisation peut aussi contenir un ou des stabilisants qui peuvent être choisis parmi les stabilisants classiquement utilisés, tels que le butylhydroxytoluène (BHT) et le monométhyl éther d'hydroquinone (MEHQ). Dans un fonctionnement préféré, ces ingrédients sont ajoutés au système de photo-stabilisation pour stabiliser les monomères acrylates et/ou méthacrylates puis sont retirés du système avant l'ajout du ou des photo-initiateurs, par exemple par passage sur une colonne d'Al(OH)₃.

Le système de photo-polymérisation peut être complété par tout ingrédient permettant d'optimiser la sonde. Par exemple, il peut être envisagé d'y ajouter une molécule fluorescente comme de la fluorescéine ou tout autre fluorochrome organique.

On peut aussi y additionner un solvant qui pourra permettre de favoriser la mouillabilité des particules thermo-fluoroluminescentes.

Les particules thermo-fluorescentes pourront être choisies dans les familles de thermo-luminophores inorganiques, organiques ou hybrides (cf. X.D. Wang, O. S. Wolfbeis, and R. J. Meier, "Luminescent probes and sensors for temperature," Chem. Soc. Rev., vol. 42, no. 19, pp. 7834-7869, 2013, doi: 10.1039/C3CS60102A.). Les agents non organiques sont en général composés d'une matrice inorganique co-dopée avec des métaux dont la luminescence varie en fonction de la température (cf. C.D. S. Brites et al. "Lanthanide-Based Thermometers: At the Cutting-Edge of Luminescence Thermometry," Advanced Optical Materials, vol. 7, no. 5, Art. no. 5, 2019, doi: 10.1002/adom.201801239.). Ainsi, on pourra retenir des nanocristaux à base de séléniure de cadmium, tels que ceux impliqués dans la technologie Quantum Dots ; des matériaux à base d'ions chromiques (Cr³⁺) ainsi que des particules à base de lanthanides comme les ions lanthane (Ln³⁺), ainsi que des chélates à base d'europium ou de terbium.. A titre de thermo-luminophores représentatifs, on retiendra la rhodamine et ses dérivés, la fluorescéine et ses dérivés, le 7-nitrobenz-2-oxa-1,3-diazol-4-yl (NDB), le laurodan, des composés à base de boro-triaryle, le perylène, la N-allyl-N-méthylaniline, le 1,3-bis-(1-pyrényl)propane, le 1-(N-p-anisyl-N-méthyl)-amino-3-anthryl-(9)-propane, l'acridine, les fullerènes C₆₀ et C₇₀. Parmi les agents hybrides, on pourra choisir des complexes métal-ligand comme des complexes à base de ruthénium (Ru(bpy)₃, Ru(phen)₃, mais aussi des complexes à base d'iridium (Ir(ppy)₂(carbac) ou de platine (Ptll(Br-thq)(acac), PtOEP). Il appartient aux connaissances générale de l'homme du métier de sélectionner un agent approprié notamment en fonction de la gamme de températures dans laquelle la sonde doit opérer.

Après les ingrédients du système de photo-polymérisation et la préparation d'un système de photo-polymérisation, un procédé de fabrication d'une fibre optique thermo-fluorescente selon l'invention est exposé en détails.

### Préparation de la fibre optique pour le dépôt du système de photo-polymérisation.

Le procédé de l'invention est compatible avec tout type de fibre optique. On préférera les fibres optiques ayant un cœur en silice et une gaine en silice dopée ou en polymère de type polymère fluorocarboné (Tefzel^{®}). De préférence, il s'agit de fibres optiques multi-mode. Elles ont un diamètre qui est de préférence de 5 à 200 µm.

Si la sonde est déposée à une extrémité de la fibre optique, il convient de la préparer pour recevoir la sonde et surtout collecter correctement le rayonnement lumineux. A cette fin, le bout de la fibre peut par exemple être plan, bien que d'autres configurations pourraient être envisagées.

Selon une alternative ou en complément, la sonde peut être déposée le long de la fibre pour une mesure par onde évanescente. A cet effet, la gaine de la fibre doit être retirée sur une distance suffisante qui dépend de la longueur d'onde de sondage utilisée pour le thermo-luminophore. La dimension du site est de l'ordre de quelques dizaines de micromètres voire quelques millimètres.

### Dépôt du précurseur photosensible sur la fibre optique

La fibre optique est trempée dans le système de photo-polymérisation qui lors du retrait de la fibre forme une goutte en son extrémité. Le volume de la goutte va dépendre du diamètre de la fibre, de sa mouillabilité par rapport au système de photo-polymérisation et de la viscosité de ce dernier.

### Dépôt des particules thermo-fluorescentes à l'extrémité de la fibre optique

La fibre optique avec sa goute pendante est ensuite mise en contact avec des particules thermo-luminescentes. Cette mise en contact peut se faire en plongeant la fibre dans la poudre, ou simplement en mettant en contact le bout de la fibre avec le tapis formé par la poudre qui est placé sur un support rigide ou un contenant. On peut également placer la fibre sous une cascade de particules : dans ce cas seules les particules en contact avec la partie de la fibre mouillée par le polymère seront retenues par capillarité. Les particules sont avantageusement sous forme de poudre et peuvent être de même nature ou en mélanges. Ainsi, un mélange peut être constitué de particules thermo-fluorescentes, de particules absorbantes et de particules ayant des propriétés optiques afin de modifier les propriétés optiques finales de la sonde en bout de fibre. Il est aussi possible d'ajouter des nanoparticules luminescentes inorganique, organiques ou hybride. On peut aussi ajouter des nanoparticules métalliques pour avoir par effet plasmon une augmentation de l'absorption.

Seule l'extrémité de la fibre optique est mise en contact avec la poudre

### Dépôt des particules thermo-fluorescentes sur des sites sur la longueur de la fibre optique

Le principe est le même que celui du dépôt à une extrémité de la fibre optique. Mais au préalable, la gaine est retirée sur une zone de la fibre optique afin de pouvoir créer des ondes évanescentes. Le retrait de la gaine peut se faire par gravure chimique ou retrait mécanique. Ces deux méthodes sont connues de l'homme du métier. La solution de précurseur peut être déposée par trempage également, dans ce cas toute la fibre est enduite mais seule la zone où se crée l'onde évanescente lors de passage du rayonnement lumineux d'activation de la photo-polymérisation dans la fibre sera polymérisée. Selon une variante, le système de photo-polymérisation peut être déposé sur lesdits sites dénudés en une goutte par un procédé d'impression par jet d'encre par exemple.

### Polymérisation du ou des monomères du système de photo-polymérisation

Une fois que la fibre optique est mise en contact avec la poudre et sans changer sa position, un rayonnement lumineux permettant d'activer la photo-polymérisation est envoyé dans la fibre depuis l'autre extrémité de la fibre. Il se propage dans le cœur de la fibre pour venir irradier l'extrémité en contact avec lesdites particules. Ainsi activée, la polymérisation se produit en bout de fibre à partir de la surface du cœur de la fibre emprisonnant ainsi les particules directement en contact avec la fibre et formant ainsi le dépôt d'un film ou sonde, sur l'extrémité de la fibre.

Dans le cas où toute la surface de l'extrémité ne serait pas totalement couverte par le film ou même pour ajouter un film complémentaire au film déposé, il est possible de renouveler l'opération, et ceci tant que le rayonnement lumineux activant la polymérisation peut traverser le ou les films déjà déposés. C'est un avantage supplémentaire de l'invention qui permet d'incrémenter la sonde d'un ou de plusieurs films, en utilisant, pour chaque film, le même système de photo-polymérisation et les mêmes particules thermo-fluorescentes, ou un système photo-polymérisable et/ou des particules thermo-fluorescentes identiques ou différents d'une fois à l'autre, à savoir en utilisant le même système de photo-polymérisation et des particules thermo-fluorescentes différentes, un système de photo-polymérisation différent et les mêmes particules thermo-fluorescentes, ou un système de photo-polymérisation différent et des particules thermo-fluorescentes différentes.

Ce procédé est simple à mettre en œuvre et relativement versatile car il permet d'incorporer différents types de particules. Il est rapide à mettre en œuvre et permet de contrôler précisément l'emplacement du dépôt, grâce à la lumière.

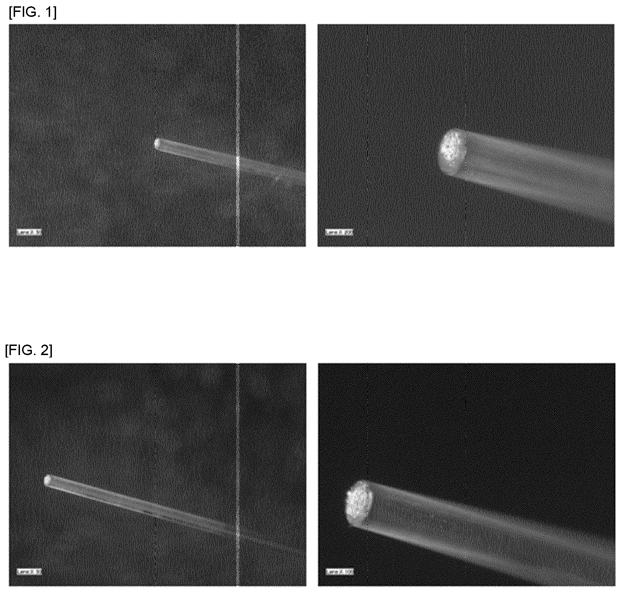

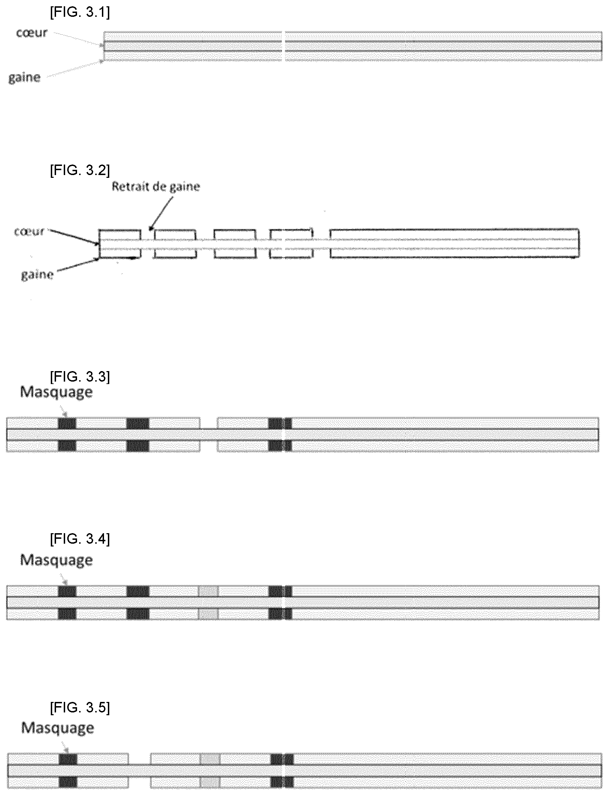

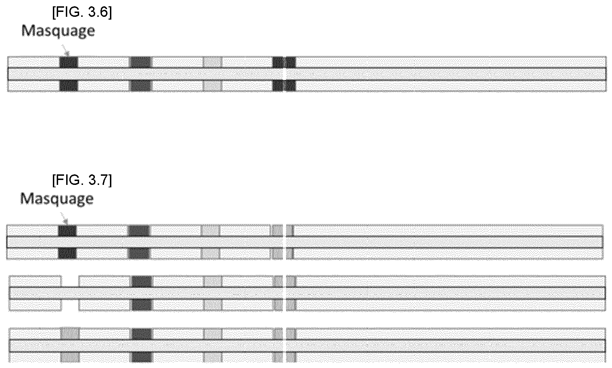

Il est illustré dans les exemples qui suivent à l'appui des [FIG. 1] à [FIG. 3] selon lesquelles :
[FIG. 1] et [FIG. 2] sont des photographies au microscope optique d'une fibre optique (diamètre 150 µm, référence Thorlabs^{®} M137L02 de 200µm de diamètre) sur une extrémité de laquelle un premier film d'une matrice contenant des particules PTIR545F de Phosphor Technology^{®} a été déposé [FIG. 1] et un second film d'une même matrice [FIG. 2] ; et
[FIG. 3.1] à [FIG. 3.7] illustrent des variantes de mise en œuvre du procédé de l'invention.

### Exemple 1 : Préparation d'un système de photo-polymérisation

On met 50g d'Al(OH)₃ à l'étuve à 150°C (origine industriel : SASOL) pour une nuit. Ensuite on laisse refroidir sous argon dans un tube Schlenk. Ensuite on charge une seringue de 20 ml en plastique avec 2g de la poudre. Au bout de la seringue, on met un embout filtre 0,1µm. On remplit la seringue de méthyl méthacrylate, puis on remet le piston et on pousse le monomère déprotégé dans une bouteille opaque contenant de l'argon. On fait buller de l'argon dans la bouteille pour dégazer les traces d'O₂.

Ensuite on prépare un deuxième flacon opaque sous argon dans lequel on introduit un photo-initiateur Irgacure 2959 en poudre (5% en masse par rapport à la masse de monomère) puis 0,5 ml de THF +1 ml d'acétone. La quantité est surdimensionnée volontairement afin d'assurer une réactivité optimale du système de photo-polymérisation. Le THF n'est pas nécessaire mais permet d'améliorer la mouillabilité.

### Exemple 2 : Fabrication d'une fibre optique selon l'invention portant une sonde à l'une de ses extrémités

Un exemple de réalisation est illustré aux [FIG. 1] et [FIG. 2]. A la [FIG. 1], on observe le dépôt d'un premier film d'une matrice contenant des particules thermo-fluorescentes. Les particules sont situées exactement au bout de la fibre et nulle part ailleurs. Le dépôt de polymère est suffisamment fin et conforme à la fibre optique pour ne pas être visible sur la photographie. A la [FIG. 2], on observe le dépôt d'un second film effectué sur le premier film de la [FIG. 1]. On constate que la quantité de particule sur la surface a augmenté. Mais le dépôt reste localisé en bout de fibre.

### Exemple 3 : Fabrication d'une fibre optique selon l'invention portant des sondes, en plusieurs sites sur sa longueur

Cet exemple, à l'appui de la [FIG. 3], illustre l'une des multiples variantes de mises en œuvre que permet un procédé selon l'invention.

Selon la variante illustrée, on conduit le procédé de l'invention sur une fibre optique présentant des sites, sur sa longueur, dénués de gaine. Sur certains des sites dénudés, on applique un masque, de sorte qu'à l'issue du procédé, le système photo-polymérisable n'a été activé que sur les sites restants non masqués. Ensuite, on retire au moins certains des masques et on renouvèle le procédé avec un système photo-polymérisable différent, et ainsi de suite pour obtenir une fibre optique munie de sondes différentes.

[FIG. 3] illustre ce séquencement :

Selon [FIG. 3.1], on dispose d'une fibre optique comprenant un cœur apte à propager la lumière et une gaine.

Selon [FIG. 3.2], on dénude certains sites sur la longueur de la fibre optique en retirant la gaine.

Selon [FIG. 3.3], on masque certains des sites dénudés.

Selon [FIG. 3.], on expose la fibre optique à un premier système photo-polymérisable et on active la photo-polymérisation sur les sites non masqués.

Selon [FIG. 3.5], on retire le masquage en certains des sites dénudés.

Selon [FIG. 3.6], on expose la fibre optique à un second système photo-polymérisable et on active la photo-polymérisation sur les sites non masqués.

Selon [FIG. 3.7], on reproduit le procédé comme ci-dessus pour obtenir une fibre optique munie sur sa longueur de sondes différentes.

A titre d'exemple on peut utiliser pour masquer les sites dénudés de la fibre un polymère qui soit facile à enlever. Typiquement c'est un polymère qui n'est pas soluble dans le solvant servant au dépôt du polymère polymérisable par UV qui sert au dépôt de particules. Par exemple des polymères hydrosolubles avec un haut point moléculaire tels que des PVA (alcool polyvinylique) ou PVP (polyvinylpyrrolidone).

## Revendications

1. Fibre optique thermo-fluorescente comprenant un cœur apte à propager la lumière et une gaine, ladite fibre portant au moins à l'une de ses extrémités ou en un site sur sa longueur, dépourvu de gaine, une sonde constituée d'une matrice comprenant des particules thermo-fluorescentes,
**caractérisée en ce que** la matrice est polymère et photo-polymérisée en présence d'au moins un système photo-polymérisable comprenant au moins un monomère photo-polymérisable et desdites particules thermo-fluorescentes.

2. Fibre selon la revendication 1, **caractérisée en ce que** la matrice photo-polymérisée est choisie dans le groupe des polymères comprenant les polyacrylates et les polyméthacrylates et leurs mélanges.

3. Fibre selon la revendication 1 ou 2, **caractérisée en ce que** la matrice est sous forme d'au moins deux couches, en des polymères identiques ou différents et des particules thermo-fluorescentes identiques ou différentes.

4. Procédé de fabrication d'une fibre optique thermo-fluorescente, comprenant les étapes suivantes :
On dispose d'une fibre optique comprenant un cœur apte à propager la lumière et une gaine, ladite fibre optique présentant au moins une extrémité ou un site sur sa longueur, dépourvu de gaine, ladite extrémité ou ledit site étant apte à irradier un rayonnement lumineux, provenant du cœur de la fibre optique,
On dépose sur ladite extrémité et/ou ledit site de la fibre optique, au moins un système photo-polymérisable comprenant au moins un monomère photo-polymérisable et des particules thermo-fluorescentes, et
On envoie dans la fibre optique un rayonnement activant la photo-polymérisation dudit système photo-polymérisable pour former une matrice photo-polymérisée comprenant lesdites particules, et ainsi obtenir ladite fibre optique thermo-fluorescente.

5. Procédé selon la revendication 4, **caractérisé en ce que** le système photo-polymérisable comprend au moins un monomère photo-polymérisable choisi parmi les acrylates et les méthacrylates et leurs mélanges.

6. Procédé selon la revendication 5, **caractérisé en ce que** la teneur en acrylate(s) et/ou en méthacrylate(s) est de 70 à 95% en poids par rapport au poids du système photo-polymérisable.

7. Procédé selon l'une quelconque des revendications 4 à 6, **caractérisé en ce que** le système photo-polymérisable comprend au moins un photo-initiateur choisi parmi les photo-initiateurs de type 1 et le formate de méthyl benzoyle.

8. Procédé selon l'une quelconque des revendications 4 à 7, **caractérisé en ce que**, après la formation de la matrice photo-polymérisée, on répète une ou plusieurs fois, les étapes de dépôt sur ladite extrémité et/ou ledit site de la fibre optique, d'au moins un système photo-polymérisable et de particules thermo-fluorescentes, et d'activation de la photo-polymérisation dudit système photo-polymérisable en envoyant dans la fibre optique un rayonnement activant ladite photo-polymérisation.

9. Procédé selon la revendication 8, **caractérisé en ce que** le système photo-polymérisable et/ou les particules thermo-fluorescentes sont différents d'une fois à l'autre.

10. Capteur de température comprenant une fibre optique thermo-fluorescente selon l'une quelconque des revendications 1 à 3.

11. Utilisation d'un capteur de température selon la revendication 10, pour déterminer la température d'un générateur électrochimique, tel qu'une batterie et notamment une batterie à Li-ion.

## Patentansprüche

1. Thermofluoreszierende Glasfaser, die einen lichtstreufähigen Kern und eine Hülle umfasst, wobei die Faser an mindestens einem ihrer Enden oder an einer Stelle entlang ihrer Länge, die keine Hülle aufweist, eine Sonde trägt, die aus einer Matrix besteht, die thermofluoreszierende Partikel umfasst,
**dadurch gekennzeichnet, dass** die Matrix polymer ist und bei Vorhandensein von mindestens einem photopolymerisierbaren System, das mindestens ein photopolymerisierbares Monomer und die thermofluoreszierenden Partikel umfasst, photopolymerisiert wird.

2. Faser nach Anspruch 1, **dadurch gekennzeichnet, dass** die photopolymerisierte Matrix aus der Gruppe der Polymere ausgewählt ist, die Polyacrylate und Polymethacrylate und deren Mischungen umfasst.

3. Faser nach Anspruch 1 oder 2, **dadurch gekennzeichnet, dass** die Matrix in Form von mindestens zwei Schichten aus identischen oder unterschiedlichen Polymeren und identischen oder unterschiedlichen thermofluoreszierenden Partikeln besteht.

4. Verfahren zum Herstellen einer thermofluoreszierenden Glasfaser, umfassend die folgenden Schritte:
Bereitstellen einer Glasfaser, die einen lichtstreufähigen Kern und eine Hülle umfasst, wobei die Glasfaser mindestens ein Ende oder eine Stelle entlang ihrer Länge aufweist, die keine Hülle aufweist, wobei das Ende oder die Stelle eine Lichtstrahlung aus dem Kern der Glasfaser ausstrahlen kann,
Aufbringen mindestens eines photopolymerisierbaren Systems, das mindestens ein photopolymerisierbares Monomer und thermofluoreszierende Partikel umfasst, auf das Ende und/oder die Stelle der Glasfaser, und
Senden, in die Glasfaser, einer Strahlung, die die Photopolymerisation des photopolymerisierbaren Systems aktiviert, um eine photopolymerisierbare Matrix zu bilden, die die Partikel umfasst, und somit die thermofluoreszierende Glasfaser zu erhalten.

5. Verfahren nach Anspruch 4, **dadurch gekennzeichnet, dass** das photopolymerisierbare System mindestens ein photopolymerisierbares Monomer umfasst, das aus Acrylaten und Methacrylaten und deren Mischungen ausgewählt ist.

6. Verfahren nach Anspruch 5, **dadurch gekennzeichnet, dass** der Gehalt an Acrylat(en) und/oder Methacrylat(en) 70 bis 95 Gew.-%, bezogen auf das Gewicht des photopolymerisierbaren Systems, beträgt.

7. Verfahren nach einem der Ansprüche 4 bis 6, **dadurch gekennzeichnet, dass** das photopolymerisierbare System mindestens einen Photoinitiator umfasst, der aus den Photoinitiatoren des Typs 1 und dem Methylbenzoylformat ausgewählt ist.

8. Verfahren nach einem der Ansprüche 4 bis 7, **dadurch gekennzeichnet, dass** nach dem Bilden der photopolymerisierbaren Matrix die Schritte des Aufbringens mindestens eines photopolymerisierbaren Systems und thermofluoreszierender Partikel auf das Ende und/oder die Stelle der Glasfaser und des Aktivierens der Photopolymerisation des photopolymerisierbaren Systems, indem eine Strahlung, die die Photopolymerisation aktiviert, in die Glasfaser gesendet wird, einmal oder mehrere Male wiederholt werden.

9. Verfahren nach Anspruch 8, **dadurch gekennzeichnet, dass** sich das photopolymerisierbare System und/oder die thermofluoreszierenden Partikel jedes Mal voneinander unterscheiden.

10. Temperatursensor, der eine thermofluoreszierende Glasfaser nach einem der Ansprüche 1 bis 3 umfasst.

11. Verwendung eines Temperatursensors nach Anspruch 10 zur Bestimmung der Temperatur eines elektrochemischen Generators, wie einer Batterie und insbesondere einer Lithium-Ionen-Batterie.

## Claims

1. A thermo-fluorescent optical fiber comprising a core able to propagate light and a sheath, said fiber carrying at least at one of its ends or at one site along its length, devoid of sheath, a probe consisting of a matrix comprising thermo-fluorescent particles,
**characterized in that** the matrix is a polymer and photo-polymerized in the presence of at least one photo-polymerizable system comprising at least one photo-polymerizable monomer and said thermo-fluorescent particles.

2. The fiber according to claim 1, **characterized in that** the photo-polymerized matrix is selected from the group of polymers comprising polyacrylates and polymethacrylates and mixtures thereof.

3. The fiber according to claim 1 or 2, **characterized in that** the matrix is in the form of at least two layers, made of identical or different polymers and identical or different thermo-fluorescent particles.

4. A method for manufacturing a thermo-fluorescent optical fiber, comprising the following steps:
An optical fiber is provided, comprising a core able to propagate light and a sheath, said optical fiber having at least one end or one site along its length, devoid of sheath, said end or said site being able to irradiate a light radiation, coming from the core of the optical fiber,
At least one photo-polymerizable system comprising at least one photo-polymerizable monomer and thermo-fluorescent particles is deposited on said end and/or said site of the optical fiber, and
Radiation is sent into the optical fiber activating the photo-polymerization of said photo-polymerizable system to form a photo-polymerized matrix comprising said particles, and thus obtain said thermo-fluorescent optical fiber.

5. The method according to claim 4, **characterized in that** the photo-polymerizable system comprises at least one photo-polymerizable monomer selected from acrylates and methacrylates and mixtures thereof.

6. The method according to claim 5, **characterized in that** the content of acrylate(s) and/or methacrylate(s) is from 70 to 95% by weight relative to the weight of the photo-polymerizable system.

7. The method according to any one of claims 4 to 6, **characterized in that** the photo-polymerizable system comprises at least one photo-initiator selected from type 1 photo-initiators and methyl benzoyl formate.

8. The method according to any one of claims 4 to 7, **characterized in that**, after the formation of the photo-polymerized matrix, the steps of depositing on said end and/or said site of the optical fiber, at least one photo-polymerizable system and thermo-fluorescent particles, and activating the photo-polymerization of said photo-polymerizable system by sending radiation into the optical fiber activating said photo-polymerization, are repeated one or several times.

9. The method according to claim 8, **characterized in that** the photo-polymerizable system and/or the thermo-fluorescent particles are different from one time to another.

10. A temperature sensor comprising a thermo-fluorescent optical fiber according to any one of claims 1 to 3.

11. Use of a temperature sensor according to claim 10, to determine the temperature of an electrochemical generator, such as a battery and in particular a Li-ion battery.
